**Europäisches Patentamt**

**European Patent Office**

**Office européen des brevets**

(19)

(11) Numéro de publication: **0 064 421**
**B1**

(12) **FASCICULE DE BREVET EUROPEEN**

(45) Date de publication du fascicule du brevet:
**20.06.84**

(51) Int. Cl.³: **B 60 R 1/06**

(21) Numéro de dépôt: **82400489.9**

(22) Date de dépôt: **18.03.82**

(54) **Dispositif de commande à distance d'un miroir de rétroviseur pour véhicule.**

(30) Priorité: **10.04.81 FR 8107272**

(43) Date de publication de la demande:
**10.11.82 Bulletin 82/45**

(45) Mention de la délivrance du brevet:
**20.06.84 Bulletin 84/25**

(84) Etats contractants désignés:
**DE IT**

(56) Documents cités:
**DE - A - 1 266 159**
**DE - A - 2 840 789**
**DE - A - 2 906 102**
**DE - A - 3 039 343**
**FR - A - 2 437 322**
**US - A - 4 286 841**

(73) Titulaire: **Manzoni, Stéphane, 1, rue Pasteur,**
**F-39200 Saint-Claude (FR)**

(72) Inventeur: **Manzoni, Stéphane, 1, rue Pasteur,**
**F-39200 Saint-Claude (FR)**

(74) Mandataire: **Moulines, Pierre et al, Cabinet BEAU de**
**LOMENIE 55, rue d'Amsterdam, F-75008 Paris (FR)**

ACTORUM AG

## Description

La présente invention a pour objet un dispositif de commande à distance d'un miroir de rétroviseur pour véhicule.

Il est connu d'utiliser des rétroviseurs dans lesquels, le miroir, commandé à distance, est monté de façon mobile à l'intérieur de son boîtier ainsi que les moyens d'articulation et de commande par moteur électrique ou par un organe actionnée manuellement.

Toutefois, ces rétroviseurs ne donnent pas entière satisfaction en ce qui concerne la protection intérieure des organes mécaniques contre la poussière et les intempéries.

Le brevet DE-A-1 266159 concerne un dispositif comprenant un organe de support solidaire de la carrosserie du véhicule et s'étendant à l'intérieur du boîtier par une ouverture, ledit organe présentant un premier axe autour duquel est montée pivotante une entretoise sur laquelle est monté pivotant, suivant un deuxième axe, perpendiculaire au premier axe, le boîtier portant le miroir, un moyen de commande de déplacement autour du premier axe, disposé suivant le second axe, étant prévu entre l'organe de support et l'entretoise et un autre moyen de commande de déplacement autour du second axe, étant disposé de façon décalée par rapport au second axe, entre l'entretoise et le boîtier.

Dans ce dispositif, le miroir étant assujetti au boîtier et non mobile à l'intérieur de celui-ci on obtient une étanchéité parfaite contre la poussière et les intempéries. Un soufflet de conception très simple assure l'obturation de l'ouverture ménagée dans le boîtier afin de permettre les débattements angulaires de celui-ci.

Toutefois, un tel dispositif est plus particulièrement adapté à des rétroviseurs de grandes dimensions qui sont montés par des moyens particuliers sur des camions ou des autobus et ne peuvent être montés facilement sur un véhicule de tourisme.

Le dispositif suivant l'invention a pour but de remédier à cet inconvénient et d'obtenir un rétroviseur dont le boîtier présente des dimensions réduites.

Conformément à la présente invention, l'organe de support est constitué d'un bras en deux parties reliées entre elles par un organe d'effacement à crabotage, l'une des parties du bras étant fixée sur la carrosserie du véhicule et l'autre partie s'étendant à l'intérieur du boîtier comportant deux paliers ayant pour axe vertical le premier axe dans lesquels sont montées deux broches sur lesquelles est articulée l'entretoise qui présente deux tourillons disposés suivant le deuxième axe horizontal et engagés dans des paliers correspondants prévus sur le boîtier.

Le mécanisme ainsi monté dans le boîtier permet de réaliser une forme de celui-ci présentant des dimensions suffisamment réduites et une épaisseur relativement faible.

Enfin, un tel rétroviseur, du fait de la disposition de son organe de support constitué par un bras, peut être monté indifféremment sur la portière ou sur le gousset de portière d'un véhicule de tourisme.

D'autres caractéristiques et avantages de l'invention seront mieux compris à la lecture de la description qui va suivre d'un mode de réalisation et en se référant aux dessins annexés, sur lesquels:

– la figure 1 est une vue en élévation d'un mode de réalisation d'un rétroviseur suivant l'invention, le miroir étant enlevé;
– la figure 2 est une vue en coupe suivant la ligne II–II de la figure 1;
– la figure 3 est une vue en coupe suivant la ligne III–III de la figure 1;
– la figure 4 est une vue en coupe suivant la ligne IV–IV de la figure 1;
– la figure 5 est une vue en coupe suivant la ligne V–V de la figure 1;
– la figure 6 est une vue en plan du rétroviseur et en coupe partielle suivant la ligne VI–VI de la figure 1;
– la figure 7 est une vue en coupe longitudinale d'un mode de réalisation d'un moyen de commande de déplacement;
– la figure 8 est une vue en coupe suivant la ligne VIII–VIII de la figure 7;
– la figure 9 est une vue en coupe suivant la ligne IX–IX de la figure 7; et
– les figures 10, 10a sont des vues en coupe montrant le détail d'un mode de réalisation de paliers.

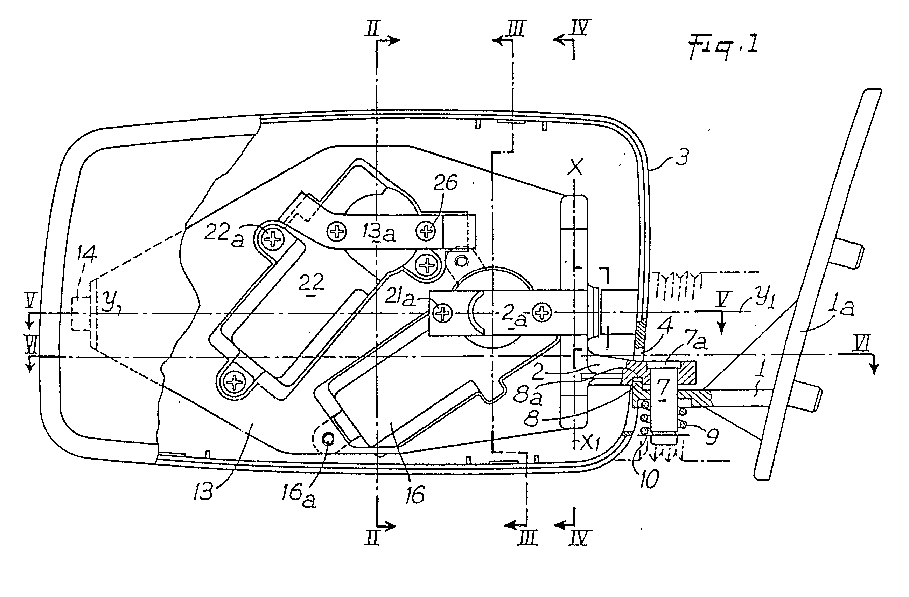

Aux figures 1 à 6, on a représenté un mode de réalisation d'un rétroviseur d'un véhicule automobile plus particulièrement destiné à être monté sur le gousset d'une portière.

Le dispositif comprend un organe de support dont une partie 1 présente une plaque 1a destinée à être fixée sur la portière du véhicule et l'autre partie 2 s'étend à l'intérieur d'un boîtier 3 de rétroviseur à travers une ouverture 4 du boîtier qui porte sur sa face avant un miroir 5 monté au moyen d'un jonc porte-miroir 6.

La partie 1 de l'organe de support est réliée à la partie 2 par un axe 7 dont la tête 7a, présentant une forme hexagonale, est solidaire de la partie 2 de l'organe de support qui présente au moins un organe de crabotage 8 engagé dans un logement 8a de la partie 2 sous l'action d'un ressort 9 en appui d'un côté contre la partie 1 du support et de l'autre côté contre une rondelle 10 engagée dans une gorge de l'axe 6 (figures 1 et 6). La partie 2 de l'organe de support, disposée à l'intérieur du boîtier, présente deux alésages 11, 11a dans lesquels sont montées pivotantes par l'une de leurs extrémités des broches 12, 12a solidaires à leur autre extrémité d'une entretoise 13 (figure 4).

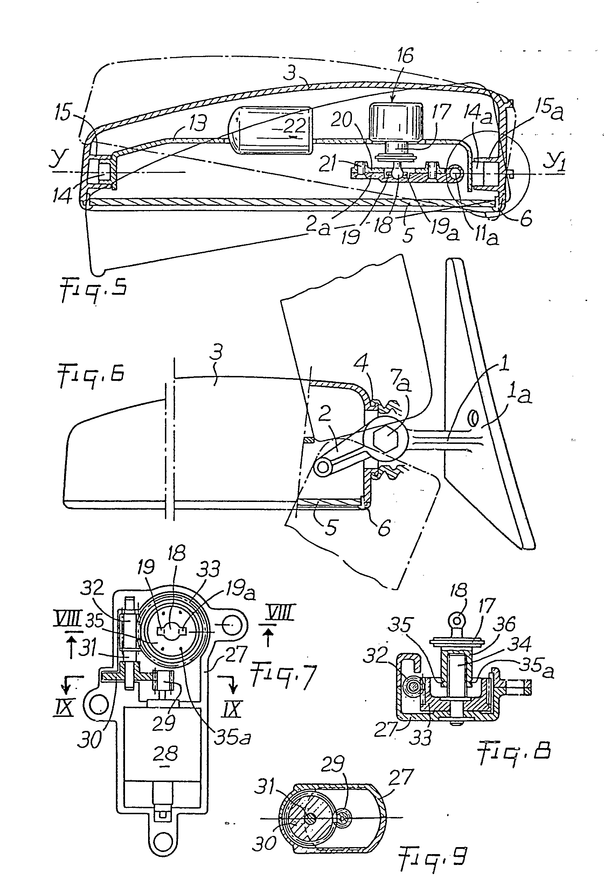

L'entretoise 13 est ainsi articulée suivant un premier axe vertical $XX_1$ sur la partie 2 de l'organe de support et elle est munie à ses deux extrémités de tourillons 14, 14a (figure 5) qui sont engagés dans des logements cylindriques ou paliers 15, 15a prévus à l'intérieur du boîtier 3. Les tourillons 14, 14a et les paliers 15, 15a sont disposés suivant un deuxième axe $YY_1$ perpendiculaire au premier axe $XX_1$ de telle sorte que le boîtier 3 est monté pivotant sur l'entretoise 13 suivant ledit deuxième axe horizontal $YY_1$.

Sur l'entretoise 13, est fixé, au moyen de vis 16a, un moyen de commande 16 du déplacement de l'entretoise par rapport à l'organe de support 2.

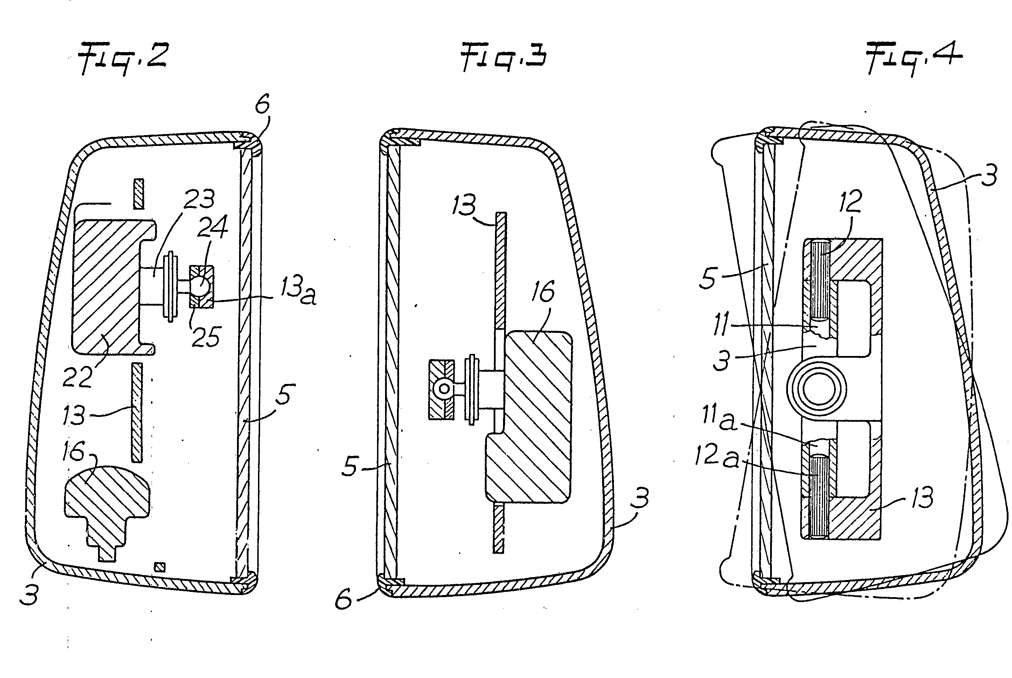

Ce moyen de commande 16 qui sera décrit plus en détail ultérieurement comporte une tête mobile 17 présentant une rotule 18 munie de deux tétons 19, 19a, ladite rotule étant disposée dans un logement prévu entre un bras 2a solidaire de l'organe de support en une plaque 20 fixée sur le bras 2a au moyen de vis 21 (figures 1 et 3). La rotule 18 est disposée suivant l'axe $YY_1$ pour faire pivoter l'entretoise autour de l'axe $XX_1$ par rapport à l'organe de support 1, 2. De la même manière, un moyen de commande 22 est fixé au moyen de vis 22a sur le fond du boîtier 3 et présente une tête mobile 23 (figures 1, 2 et 5) comportant une rotule 24 munie de deux tétons comme ci-dessus, ladit rotule étant disposée dans un logement sphérique prévu entre un bras 13a solidaire de l'entretoise 13 et une plaque 25 fixée sur le bras au moyen de vis 26.

Aux figures 7, 8, 9, on a représenté un mode de réalisation des moyens de commande de déplacement 16 et 22 qui comprennent chacun un carter 27 dans lequel est fixé un moteur électrique 28 dont l'arbre de sortie porte un pignon 29 qui engrène avec un pignon 30 calé sur un axe 31 monté rotatif dans le carter et qui est conformé pour constituer une vis sans fin 32 engrenant avec une roue tangente 33 qui est solidaire en rotation d'une tige 34 à filet hélicoïdal ou tige filetée dans laquelle est engagée la partie médiane de deux étriers élastiques 35, 35a solidaires d'un fourreau 36 disposé autour de la tige 34 et dont la tête 17 ou 23 porte une rotule 18 ou 24 munie de tétons 19, 19a.

Le dispositif fonctionne de la manière suivante: lorsqu'on alimente le moteur 28, on entraîne en rotation, par les pignons 29, 30, la vis 32 et la roue tangente 33, la tige 34, par son filet hélicoïdal ou tige filetée, entraînant en translation les étriers 35, 35a et le fourreau 36.

En conséquence, si on actionne le moyen de commande 16, on déplace l'entretoise 13 par rapport à l'organe de support 1, 2, de telle sorte que l'entretoise et le boîtier 3, portant le miroir 5, se déplacent autour de l'axe vertical $XX_1$ suivant un mouvement gauche-droite.

D'autre part, en actionnant le moyen de commande 22, on déplace le boîtier 3 portant le miroir 5 autour de l'axe horizontal $YY_1$ suivant un mouvement ciel-terre.

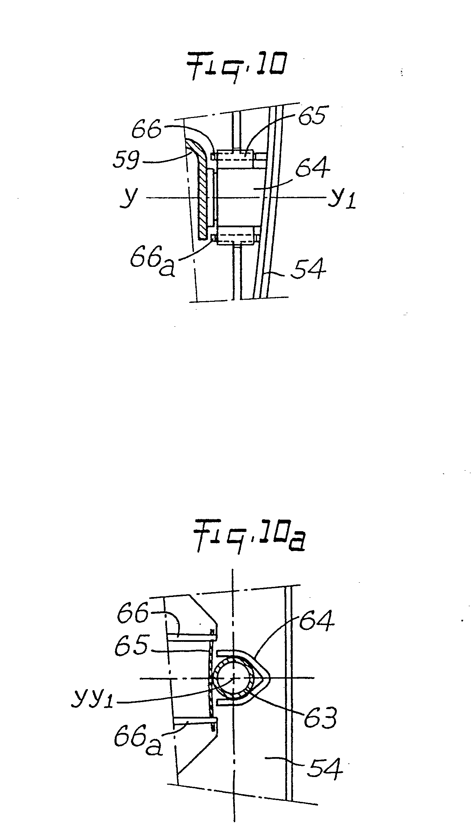

Suivant un autre mode de réalisation représenté aux figures 10, 10a, dans sa partie médiane l'entretoise 59 présente deux tourillons 63, 63a qui sont montés pivotants dans des logements 64, 64a du boîtier ouverts d'un côté où ils sont maintenus par une lame élastique 65, notamment en acier, en appui contre des organes de support 66, 66a solidaires du boîtier 54.

De cette manière, le boîtier 54 est monté pivotant suivant un axe horizontal $YY_1$ sur l'entretoise 59.

Bien que l'on ait décrit et représenté des moyens de commande utilisant des moteurs électriques, il est bien évident que le déplacement des organes du rétroviseur peut être obtenu par tout autre moyen mécanique et notamment par un câble qui est actionné de l'intérieur du véhicule par un organe de commande manuelle.

**Revendications**

1. Dispositif de commande à distance d'un miroir de rétroviseur pour véhicule fixé sur un boîtier (3) renfermant un mécanisme de commande comprenant un organe de support (2) solidaire de la carrosserie du véhicule et s'étendant à l'intérieur du boîtier par une ouverture (4), ledit organe présentant un premier axe ($XX_1$) autour duquel est montée pivotante une entretoise (13) sur laquelle est monté poivotant suivant un deuxième axe ($YY_1$), perpendiculaire au premier axe ($XX_1$), le boîtier (3) portant le miroir (5), un moyen de commande (16) de déplacement autour de l'axe ($XX_1$) disposé suivant le second axe ($YY_1$) étant prévu entre l'organe de support (2) et l'entretoise (13) et un autre moyen de commande (22) de déplacement autour de l'axe ($YY_1$) étant disposé de façon décalée par rapport au second axe ($YY_1$) entre l'entretoise et le boîtier (3), caractérisé en ce que l'organe de support est constitué d'un bras en deux parties (1, 2) reliées entre elles par un organe d'effacement à crabotage (7, 8, 9), l'une des parties (1) du bras étant fixée sur la carrosserie du véhicule et l'autre partie 2, s'étendant à l'intérieur du boîtier (3), comportant deux paliers (11, 11a) ayant pour axe vertical le premier axe ($XX_1$) dans lesquels sont montées deux broches (12, 12a) sur lesquelles est articulée l'entretoise (13) qui présente deux tourillons (14, 14a) disposés suivant le deuxième axe ($YY_1$) horizontal et engagés dans des paliers correspondants (15, 15a) prévus sur le boîtier (3).

2. Dispositif suivant la revendication 1, caractérisé en ce que les paliers prévus sur le boîtier sont constitués chacun par un logement (64) ouvert d'un côté et dans lequel est maintenu un tourillon (15, 63) de l'entretoise (13, 59) sous l'action d'une lame élastique (65) dont les deux extrémités sont en appui contre deux organes de support (66, 66a) solidaires du boîtier (3, 54).

3. Dispositif suivant la revendication 1, caractérisé en ce que les moyens de commande (16, 22) de déplacement sont constitués chacun d'un carter (27), fixé sur l'entretoise (13) ou sur le boîtier (3) et dans lequel est disposé un moteur électrique (28) entraînant en rotation par un moyen de transmission (30, 31, 32, 33) une tige (34), à filet hélicoïdal dans lequel est engagée la partie médiane d'au moins un étrier élastique (35, 35a) qui est solidaire d'un fourreau (36) disposé autour de la tige et dont une extrémité est montée de façon articulée au moyen d'une rotule (18, 24) sur l'organe de support ou sur l'entretoise.

4. Dispositif suivant la revendication 1, caractérisé en ce que les moyens de commande de déplacement des organes sont actionnés chacun à partir d'un câble de commande dont l'une des extrémités est reliée au boîtier (3, 54) ou à l'entretoise (13; 59) et dont l'autre extrémité est reliée à un organe de manœuvre manuel disposé dans le véhicule.

**Patentansprüche**

1. Vorrichtung zur Fernsteuerung eines Rückspiegels für Kraftfahrzeuge, der an einem einen Steuermechanismus umschliessenden Gehäuse (3) befestigt ist, mit einem Tragorgan (2), das mit dem Aufbau des Fahrzeugs verbunden ist und sich durch wenigstens eine Öffnung (4) in den Innenraum des Gehäuses erstreckt, wobei das Tragorgan eine erste Achse $(XX_1)$ aufweist, an der ein Zwischenträger (13) angelenkt ist, an dem längs einer zur ersten Achse $(XX_1)$ senkrechten Achse $(YY_1)$ das den Spiegel (5) tragende Gehäuse (3) angelenkt ist, wobei zwischen dem Tragorgan (2) und dem Zwischenträger (13) eine Steuereinrichtung (16) für die Verstellung um die Achse $(XX_1)$ längs der zweiten Achse $(YY_1)$ vorgesehen ist und wobei zwischen dem Zwischenträger und dem Gehäuse (3) eine weitere Steuereinrichtung (22) für die Verstellung um die Achse $(YY_1)$ versetzt gegenüber der zweiten Achse $(YY_1)$ angeordnet ist, dadurch gekennzeichnet, dass das Tragorgan aus einem Arm aus zwei Teilen (1, 2) besteht, die durch ein Rückstellelement mit Klauenkupplung (7, 8, 9) miteinander verbunden sind, wobei das eine (1) der Teile des Arms am Aufbau des Fahrzeugs befestigt ist und wobei das andere Teil (2) sich innerhalb des Gehäuses (3) erstreckt und zwei Lager (11, 11a) aufweist, die als senkrechte Achse die erste Achse $(XX_1)$ aufweisen und in denen zwei Stifte (12, 12a) eingesetzt sind, an denen der Zwischenträger (13) angelenkt ist, der zwei Drehzapfen (14, 14a) aufweist, die längs der zweiten Achse $(YY_1)$ angeordnet sind und in die entsprechenden Lager (15, 15a) am Gehäuse (3) eingreifen.

2. Vorrichtung nach Anspruch 1, dadurch gekennzeichnet, dass die am Gehäuse vorgesehenen Lager jeweils aus einem einseitig offenen Sitz (64) bestehen, in dem ein Drehzapfen (15, 63) des Zwischenträgers (13, 59) unter der Wirkung eines elastischen Streifens (65) gehalten wird, dessen beide Enden an zwei mit dem Gehäuse (3, 54) verbundenen Tragorganen (66, 6a) anliegen.

3. Vorrichtung nach Anspruch 1, dadurch gekennzeichnet, dass die Steuereinrichtung (16, 22) für die Verstellung jeweils aus einem Kasten (27) bestehen, der am Zwischenträger (13) oder am Gehäuse (3) befestigt ist und in dem ein Elektromotor (28) angeordnet ist, der über ein Getriebe (30, 31, 32, 33) eine Stange (34) mit Schraubengewinde dreht, in das das Mittelteil wenigstens eines elastischen Bügels (35, 35a) eingreift, der mit einer Hülse (36) verbunden ist, die um die Stange herum angeordnet ist und in deren eines Ende mittels eines Kugelzapfens (18, 24) am Tragorgan (53) und am Zwischenträger (59) angelenkt ist.

4. Vorrichtung nach Anspruch 1, dadurch gekennzeichnet, dass die Steuereinrichtung für die Verstellung der Tragorgane jeweils von einem Steuerseil betätigt werden, dessen eines Ende mit dem Gehäuse (3, 54) oder dem Zwischenträger (13; 59) und dessen anderes Ende mit einem im Fahrzeug angeordneten Handbetätigungsorgan verbunden sind.

**Claims**

1. Device for the remote control of a rearview mirror for motor vehicles, fixed on a case (3) which contains a control mechanism comprising a supporting member (2) integral with the vehicle body and extending inside the case through an opening (4), said member having a first axis $(XX_1)$ around which a crosspiece (13) is pivotally mounted, on which crosspiece the case (3), holding the mirror (5), is pivotally mounted on a second axis $(YY_1)$ perpendicular to the first axis $(XX_1)$ means (16) of controlling the displacement around axis $(XX_1)$ placed on second axis $(YY_1)$ being provided between the supporting member (2) and the crosspiece (13) and other means (22) of controlling the displacement around axis $(YY_1)$ being disposed in offset manner with respect to the second axis $(YY_1)$ between the crosspiece and the case (3), characterized in that the supporting member is constituted by a two-part arm (1, 2) the two part of which are connected together by a retraction member with locking means (7, 8, 9), one of the parts (1) of the arm being secured on the vehicle body and the other part 2, which extends inside the case (3), comprising 2 bearing (11, 11a) having as vertical axis the first axis $(XX_1)$ in which two pins (12, 12a) are mounted, on which pins the crosspiece (13) is hinged, which crosspiece (13) is provided with two journals (14, 14a) placed on the second horizontal axis $(YY_1)$ and engaged in corresponding bearings (15, 15a) provided on the case (3).

2. Device according to claim 1, characterized in that the bearings provided on the case are each constituted by a housing (64) opened on one side and in which a journal (15, 63) of the crosspiece (13, 59) is held under the action of an elastic blade (65) the two ends of which rest on two supporting members (66, 66a) integral with the case (3, 54).

3. Device according to claim 1, characterized in that the displacement control means (16, 22) are constituted by a casing (27) fixed on the crosspiece (13) or on the case (3) and in which is placed an electric engine (28) driving a rod (34) in rotation by way of transmission means (30, 31, 32, 35) said rod having a helicoidal threading into which engages the middle part of at least one elastic clip (35, 35a) which is integral with a sleeve (36) placed around the rod and of which one end is hingedly mounted by means of a knuckle joint (18, 24) on the supporting member or on the crosspiece.

4. Device according to claim 1, characterized in that the means controlling the displacement of the members are each actuated from a control wire, one end of which is connected to the case (3, 54) or to the crosspiece (13, 59) and the other end is connected to manual-operating means placed in the vehicle.

Fig. 1

0 064 421

Fig.2

Fig.3

Fig.4

0 064 421

Fig.5

Fig.6

Fig.7

Fig.8

Fig.9

# Fig. 10

66
59
y
66a

65
64
y₁
54

# Fig. 10a

66
65
yy₁
66a

64
63
54